# EUROPÄISCHE PATENTANMELDUNG

(11) **EP 2 685 149 A1**
(43) Veröffentlichungstag der Anmeldung: **15.01.2014**
(21) Anmeldenummer: 13175049.9
(22) Anmeldetag: 04.07.2013
(51) Int. Cl.: F16N 25/02

(54) **Schmiervorrichtung zur Versorgung eines Werkstücks mit Schmiermittel**

(30) Priorität: 11.07.2012 DE 102012013709
(71) Anmelder: SMS Meer GmbH, 41069 Mönchengladbach (DE)
(72) Erfinder: Topüth, Manfred, 41849 Wassenberg (DE); Oberwelland, Heinrich, 41812 Erkelenz (DE); Steuermann, Stephan, 41065 Mönchengladbach (DE); Topüth, Arno, 41239 Mönchengladbach (DE)
(74) Vertreter: Grosse, Wolf-Dietrich Rüdiger

(57) **Zusammenfassung**

Die Erfindung betrifft eine Schmiervorrichtung (1) zur Versorgung eines Werkzeugs (2) mit Schmiermittel, insbesondere mit Schmierfett oder -öl, wobei die Schmiervorrichtung (1) einen Schmierverteiler (3) umfasst, in den mindestens eine Kolbenbohrung (4) eingebracht ist, in dem ein Kolben (5) oszillierend bewegbar angeordnet ist, wobei die Kolbenbohrung (4) in ihren axialen Endbereichen mit je einer Verschlusssehraube (6, 7) verschlossen ist. Um insbesondere bei der Anwendung in einem Rohrexpansionswerkzeug eine Überwachung des Schmiersystems zu gewährleisten, sieht die Erfindung vor, dass in oder an mindestens einer Verschlussschraube (6) mindestens ein Sensor (8) angeordnet ist, der mit einer Überwachungseinrichtung (9) in Verbindung steht, um mindestens einen Betriebsparameter des Schmierverteilers (3) zu erfassen und zu überwachen.

## Beschreibung

Die Erfindung betrifft eine Schmiervorrichtung zur Versorgung eines Werkzeugs mit Schmiermittel, insbesondere mit Schmieröl oder Schmierfett, wobei die Schmiervorrichtung einen Schmierverteiler umfasst, in den mindestens eine Kolbenbohrung eingebracht ist, in dem ein Kolben oszillierend bewegbar angeordnet ist, wobei die Kolbenbohrung in ihren axialen Endbereichen mit je einer Verschlussschraube verschlossen ist.

Werkzeuge verschiedener Art müssen für einen ordnungsgemäßen Betrieb mit Schmiermittel versorgt werden, wobei insbesondere Schmieröl oder Schmierfett in hinreichender Menge zur Verfügung gestellt werden muss. Als Beispiel, aber auch als Ausführungsform, die vorliegend diesbezüglich besonders relevant ist, sei ein Rohrexpansionswerkzeug genannt, wie es in der DE 100 08 688 C1 beschrieben ist.

Zur Versorgung eines solchen Werkzeugs sind Schmiervorrichtungen der eingangs genannten Art bekannt, die einen Schmierverteiler haben. In den blockförmig ausgebildeten Schmierverteiler sind meist mehrere Bohrungen eingearbeitet, in denen Kolben oszillatorisch beweglich platziert sind. Die axialen Enden der Kolbenbohrung wird durch je eine Verschlussschraube verschlossen. Die Verschlussschraube stellt einen axialen Anschlag für den Kolben her.

Durch oszillatorischen Antrieb des Kolbens kann mit jedem Kolbenhub eine definierte Menge Schmierfett oder -öl gefördert und an das Werkzeug weitergeleitet werden, um eine gewünschte Schmiermittelmenge Öl oder Fett pro Zeit an das Werkzeug auszubringen.

Insbesondere in genannten Anwendungsfall eines Rohrexpansionswerkzeugs besteht ein Problem darin, dass die Überwachung des Schmiersystems beim Rohraufweiten problematisch ist. Die ist auch dadurch bedingt, dass der Schmierverteiler während des Expansionsprozesses selber nicht zugänglich ist. Daher besteht die Gefahr einer erheblichen Werkzeugschädigung, falls eine ungenügende Funktion des Schmiersystems nicht rechtzeitig erkannt werden kann.

Der Erfindung liegt daher die Aufgabe zugrunde, eine Schmiervorrichtung der eingangs genannten Art so fortzubilden, dass es möglich wird, eine Überwachung des Schmiersystems sicherzustellen, auch wenn der Schmierverteiler selber nicht hinreichend zugänglich ist.

Die Lösung dieser Aufgabe durch die Erfindung ist dadurch gekennzeichnet, dass in oder an mindestens einer Verschlussschraube des Schmierverteilers mindestens ein Sensor angeordnet ist, der mit einer Überwachungseinrichtung in Verbindung steht, um mindestens einen Betriebsparameter des Schmierverteilers zu erfassen und zu überwachen.

Der Sensor kann ein Beschleunigungs-, Geschwindigkeits-, Kontakt- oder Wegsensor sein, mit dem die Kontaktnahme des Kolbens mit der Verschlussschraube detektierbar ist.

Der Sensor kann auch ein Temperatursensor oder ein Drucksensor sein.

Die Verschlussschraube hat bevorzugt einen zylindrischen Gewindeabschnitt, der mit einer Bohrung versehen ist, in der ein Anschlagselement angeordnet ist. Das Anschlagselement hat dabei bevorzugt eine zylindrische Form. Der Sensor kann hierbei im Grund der Bohrung angeordnet sein.

Weiterhin sind in vorteilhafter Weise Mittel zur drahtlosen Übertragung von Signalen vom Sensor zur Überwachungseinrichtung vorhanden. Diese Mittel können zur Datenübertragung per Funk ausgebildet sein.

Das versorgte Werkzeug ist besonders bevorzugt ein Rohrexpansionswerkzeug, wie es in der Rohrherstellung, insbesondere in der Großrohrherstellung, zum Einsatz kommt.

Mittels des vorgeschlagenen Überwachungssystems wird also das Versagen eines Schmierverteilers rechtzeitig erkannt, so dass Schäden am Werkzeug zuverlässig verhindert werden können. Insbesondere kann Verschleiß an Gleitelementen rechtzeitig erkannt werden.

In der Zeichnung ist ein Ausführungsbeispiel der Erfindung dargestellt. Es zeigen:
- Fig. 1: schematisch den Schmierverteiler einer Schmiervorrichtung für ein Rohrexpansionswerkzeug und
- Fig. 2: eine Verschlussschraube des Schmierverteilers.

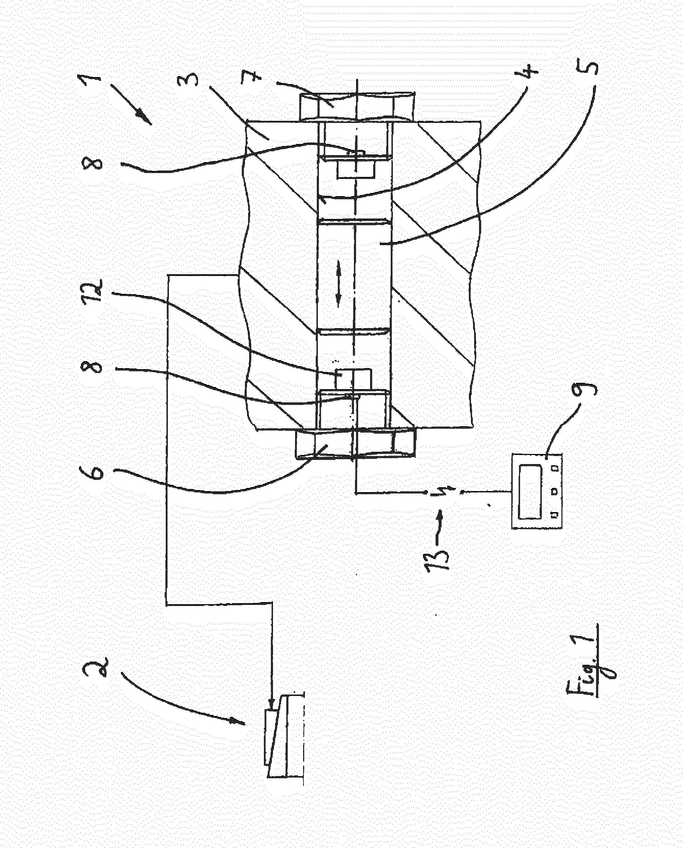

In Fig. 1 ist eine Schmiervorrichtung 1 dargestellt, die zur Schmierstoffversorgung eines Werkzeugs 2 dient. Das Werkzeug 2 ist ein Rohrexpansionswerkzeug, wie es beispielsweise in der DE 100 08 688 C1 beschrieben ist.

Kernstück der Schmiervorrichtung 1 ist ein Schmierverteiler 3, dessen generelle Bauform als solche bekannt ist. Demnach weist der Schmierverteiler 3 eine Kolbenbohrung 4 auf, um es einem Kolben 5 zu ermöglichen, in der Bohrung 4 eine oszillierende Bewegung auszuführen; das ist durch den Doppelpfeil in Fig. 1 angedeutet. Die Kolbenbohrung 4 ist an ihren Enden verschlossen, wozu Verschlussschrauben 6 und 7 dienen.

Die Verschlussschrauben 6 und 7 dienen auch der Dosierung eines exakten Schmiermittelvolumens, da hiermit die axiale Beweglichkeit des Kolbens 5 begrenzt und somit das ausgebrachte Volumen an Schmiermittel pro Kolbenhub definiert und insofern auch begrenzt wird.

Wesentlich und neu ist, dass in den beiden Verschlussschrauben 6 und 7 je ein Sensor 8 angeordnet ist. Die beiden Sensoren sind - dies ist allerdings nur für den Sensor der Verschlussschraube 6 angedeutet - mit einer Überwachungseinrichtung 9 verbunden. Damit kann ein Betriebsparameter des Schmierverteilers 3 erfasst und überwacht werden.

Die Datenübertragung vom Sensor 8 zur Überwachungseinrichtung 9 ist hierbei im Ausführungsbeispiel drahtlos ausgebildet, wozu Mittel 13 vorgesehen sind, die auf der Basis von Funksignalen arbeiten.

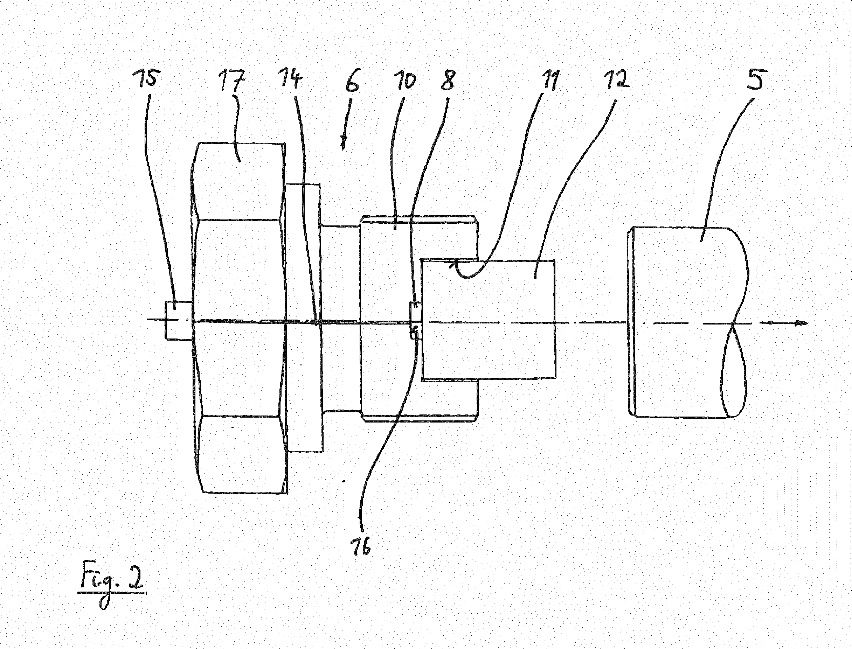

In Fig. 2 sind Details der erfindungsgemäß vorgeschlagenen Verschlussschraube 6, 7 zu sehen. Angedeutet ist in dieser Figur auch der sich oszillierend bewegende Kolben 5.

Die Verschlussschraube 6 hat eine Bohrung 11 in einem zylindrischen Gewindeabschnitt 10, in die ein Anschlagselement 12 eingepasst ist. Das Anschlagselement 12 ist als zylindrischer Körper ausgeführt, der einen Teil seiner axialen Erstreckung in die Bohrung 11 hineinreicht.

Im Grund der Bohrung 11 ist der Sensor 8 platziert. Für ihn ist im Grund der Bohrung 11 noch eine Vertiefung 16 eingearbeitet. Das Anschlagselement 12 ist dann nach der Montage des Sensors 8 in der Bohrung 11 fixiert. Die vom Sensor 8 ermittelten Daten werden zunächst per Kabel 15 in den Bereich des Schraubenkopfs 17 übertragen. Hier ist ein Sender 15 angeordnet, der mit einem (nicht dargestellten) Empfänger kommuniziert; Sender 15 und Empfänger stellen die Mittel 13 zur drahtlosen Übertragung von Signalen dar.

Mit der vorgeschlagenen Ausgestaltung ist es möglich, in einfacher und sicherer Weise den Schmierverteiler 3 zu überwachen, um abnorme Betriebszustände schnell detektieren zu können. Schäden am Werkzeug 2 können so verbessert verhindert werden.

### Bezugszeichenliste:

- 1: Schmiervorrichtung
- 2: Werkzeug (Rohrexpansionswerkzeug)
- 3: Schmierverteiler
- 4: Kolbenbohrung
- 5: Kolben
- 6: Verschlussschraube
- 7: Verschlussschraube
- 8: Sensor
- 9: Überwachungseinrichtung
- 10: zylindrischer Gewindeabschnitt
- 11: Bohrung
- 12: Anschlagselement
- 13: Mittel zur drahtlosen Übertragung von Signalen (Funkmittel)
- 14: Kabel
- 15: Sender
- 16: Vertiefung
- 17: Schraubenkopf

## Patentansprüche

1. Schmiervorrichtung (1) zur Versorgung eines Werkzeugs (2) mit Schmiermittel, wobei die Schmiervorrichtung (1) einen Schmierverteiler (3) umfasst, in den mindestens eine Kolbenbohrung (4) eingebracht ist, in dem ein Kolben (5) oszillierend bewegbar angeordnet ist, wobei die Kolbenbohrung (4) in ihren axialen Endbereichen mit je einer Verschlussschraube (6, 7) verschlossen ist,
**dadurch gekennzeichnet, dass**
in oder an mindestens einer Verschlussschraube (6) mindestens ein Sensor (8) angeordnet ist, der mit einer Überwachungseinrichtung (9) in Verbindung steht, um mindestens einen Betriebsparameter des Schmierverteilers (3) zu erfassen und zu überwachen.

2. Schmiervorrichtung nach Anspruch 1, **dadurch gekennzeichnet, dass** der Sensor (8) ein Beschleunigungs-, Geschwindigkeits- oder Wegsensor ist, mit dem die Kontaktnahme des Kolbens (5) mit der Verschlussschraube (6) detektierbar ist.

3. Schmiervorrichtung nach Anspruch 1, **dadurch gekennzeichnet, dass** der Sensor (8) ein Temperatursensor ist.

4. Schmiervorrichtung nach Anspruch 1, **dadurch gekennzeichnet, dass** der Sensor (8) ein Drucksensor ist.

5. Schmiervorrichtung nach einem der Ansprüche 1 bis 3, **dadurch gekennzeichnet, dass** die Verschlussschraube (6) einen zylindrischen Gewindeabschnitt (10) aufweist, der mit einer Bohrung (11) versehen ist, in der ein Anschlagselement (12) angeordnet ist.

6. Schmiervorrichtung nach Anspruch 5, **dadurch gekennzeichnet, dass** das Anschlagselement (12) eine zylindrische Form aufweist.

7. Schmiervorrichtung nach Anspruch 5 oder 6, **dadurch gekennzeichnet, dass** der Sensor (8) im Grund der Bohrung (11) angeordnet ist.

8. Schmiervorrichtung nach einem der Ansprüche 1 bis 7, **dadurch gekennzeichnet, dass** Mittel (13) zur drahtlosen Übertragung von Signalen vom Sensor (8) zur Überwachungseinrichtung (9) vorhanden sind.

9. Schmiervorrichtung nach Anspruch 8, **dadurch gekennzeichnet, dass** die Mittel (13) zur drahtlosen Übertragung Funkmittel sind.

10. Schmiervorrichtung nach einem der Ansprüche 1 bis 9, **dadurch gekennzeichnet, dass** das versorgte Werkzeug (2) ein Rohrexpansionswerkzeug ist.
